# EUROPEAN PATENT APPLICATION

(11) **EP 3 881 920 A1**
(43) Date of publication of application: **22.09.2021**
(21) Application number: 21163750.9
(22) Date of filing: 19.03.2021
(51) Int. Cl.: B01D 29/01, B01D 29/64, B01D 33/04, B01D 36/00, B23Q 11/00, B23Q 11/10

(54) **CLEANING DEVICE FOR FILTERS IN EVACUATION SYSTEMS FOR PROCESSING WASTE OF MACHINE TOOLS AND EVACUATION SYSTEM EQUIPPED WITH SAID CLEANING DEVICE**

(30) Priority: 19.03.2020 IT 202000005902
(71) Applicant: Tecnimetal International S.r.L., 26037 San Giovanni In Croce (Cremona) (IT)
(72) Inventor: BORRINI, Matteo, 26037 San Giovanni In Croce (Cremona) (IT)
(74) Representative: Fanzini, Valeriano

(57) **Abstract**

The invention relates to a cleaning device (10) for a filter (110) in an evacuation system (100) of machine tool processing waste (S). The cleaning device (10) comprises a support structure (12), a cleaning element (14) adapted to be arranged at the filter (110), and movement means (16) of the cleaning element (14) adapted to move the cleaning element (14) on the retaining surface (110A) of the filter (110) and towards a discharge area (18).

## Description

The present invention relates to the field of evacuation systems for processing waste produced by machine tools during the operation thereof. In particular, the present invention relates to the conveyor systems of said waste and more in particular to the filtration systems associated with said conveyor systems.

It is well known in the operation of machine tools, such as grinding machines, lathes, etc., that solid waste materials are produced, such as shavings and/or particles and/or dust removed by corresponding tools (tillers, abrasive discs, etc). The solid waste material is typically mixed with liquids coming directly from the processing, such as cooling and/or lubrication liquids/oils.

At said machine tools, conveyor systems are used to receive said waste material and convey it to subsequent recovery or disposal stations. To enable the recovery and disposal, the known type of systems include a separation step of the solid and liquid waste material through appropriate filtration, possibly through several successive steps of filters for a gradual coarse to finer filtration.

Known conveyor systems comprise a receiving tank of the waste material (solid plus liquid) to be evacuated, to which are associated one or more filter units and at least one conveyor belt (straight or with a ramp) with articulated mesh to transport the filtered shavings to a collection point, or container. Thus said conveyor belt extends inside the tank, preferably in a closed loop and appropriately motorised.

Inside the tank, the material to be evacuated is moved through appropriate pumping systems, typically by means of suction pumps. The conveyor belt and filters are arranged upstream of the pumps to convey the shavings to the collection point before the shavings themselves reach the suction pumps. Finally, the suction pumps eject the processing liquid cleaned from the shavings previously retained by the filter units.

According to the known type of techniques, the filters comprise filtration grids which are positioned to intercept the flow of waste material, solid plus liquid, at a channel inside the tank. As the filtration process progresses, such known systems must undergo continuous maintenance consisting of system shutdown (pump stop), manual filter removal, cleaning and repositioning of the filters or the replacement thereof, and system restart.

This results in unwanted process interruptions with associated negative consequences in terms of process times and/or costs.

The maintenance and/or repair operations are also particularly complex, requiring specialised personnel, with relative high intervention times and/or costs.

In addition, during normal operation the filters gradually lose the filtration capacity thereof due to the gradual clogging thereof. Therefore, the filtration capacity of the filter decreases, resulting in increased filtration times and reduced system efficiency.

Furthermore, any delays in the maintenance operations can lead to alarm situations, such as the total clogging of the filters with possible machine stoppages or idling of the pumps and consequent risk of overheating or breakage thereof.

The main object of the present invention is to solve or at least partially overcome the drawbacks characterising the solutions known in the background art.

It is a main object of the present invention to propose a system which simplifies the maintenance and/or repair interventions with respect to the known systems.

It is another object of the present invention to increase the efficiency of the known systems.

It is a further object of the present invention to increase the reliability of the known systems.

Such and other objects are achieved by virtue of the features of the invention reported in the independent claims 1 and 10. The dependent claims outline preferred and/or particularly advantageous aspects of the invention.

In particular, in a first aspect thereof, the present invention provides a cleaning device for a filter in a machine tool processing waste evacuation system, in which the cleaning device comprises:
- a support structure;
- a cleaning element adapted to be placed at said filter;
- means for moving said cleaning element adapted to move said cleaning element over the retaining surface of said filter and towards a discharge area.

In a preferred embodiment, the cleaning device comprises evacuation means arranged at said discharge area.

Preferably, the evacuation means comprises a discharge channel, preferably a chute.

According to a preferred embodiment, the cleaning element comprises a laminar element of a conjugate shape to the retaining surface of the filter.

In a preferred embodiment, the laminar element is of longitudinal extension, preferably straight.

Preferably, the laminar element comprises a plastic material portion, preferably of polyzene.

According to a preferred embodiment, the plastic portion is removably associated, preferably by screws, with a support portion of the cleaning element.

In a preferred embodiment, the movement means comprise an articulated closed-loop structure mechanism for moving the cleaning element in a feed direction along a closed circuit.

Preferably, part of the closed circuit involves the retaining surface of the filter where solid parts of the processing waste are deposited.

According to a preferred embodiment, the movement means comprise an electric motor.

In a second aspect thereof, the present invention provides a machine tool processing waste evacuation system comprising an inlet area for said processing waste, a first outlet area for solid parts of said processing waste, a second outlet area for the liquid part of said processing waste, and at least one filtration area between said inlet area and said second outlet area, said filtration area comprising a filter for retaining solid parts of said processing waste, in which said evacuation system comprises a cleaning device for said filter made according to the above description.

In a preferred embodiment, the system comprises a tank provided with said inlet area for processing waste and said second outlet area for the liquid part of the processing waste.

Preferably, the evacuation system comprises a suction system arranged downstream of the filter and at the second outlet area.

According to a preferred embodiment, the suction system comprises suction pumps.

In a preferred embodiment, the evacuation system comprises a conveyor belt for transporting the solid parts of the processing waste to the first outlet area.

Preferably, the tank comprises a first compartment for the filter and a second compartment adapted to receive the conveyor belt, said two compartments hydraulically communicating with each other.

According to a preferred embodiment, the cleaning device is associated with the filtration area so that the cleaning element is arranged at the retaining surface of the filter.

In a preferred embodiment, the discharge area of the cleaning device is located above the conveyor belt.

Further features and advantages of the invention will be more apparent after reading the following description provided by way of non-limiting example, with the aid of the figures shown in the accompanying drawings, where:
- Figure 1: illustrates in axonometric view a waste evacuation system equipped with a cleaning device according to a preferred embodiment of the invention;
- Figure 2: illustrates the system and the device of figure 1 according to another point of view;

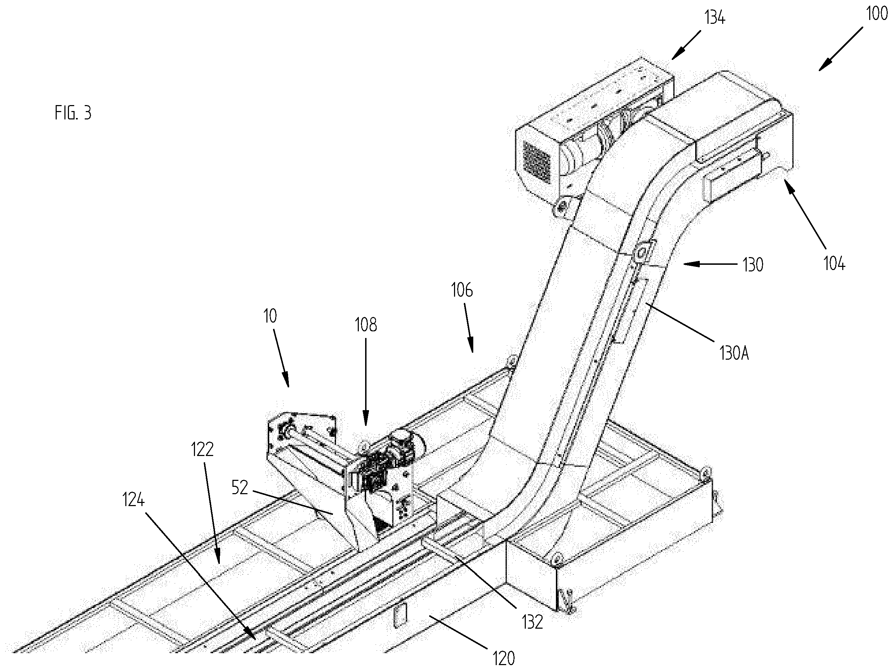

- Figure 3: illustrates the system and the device of figure 2 with some elements removed;
- Figure 4: illustrates a partially sectioned axonometric view of the system and the device according to the preferred embodiment;

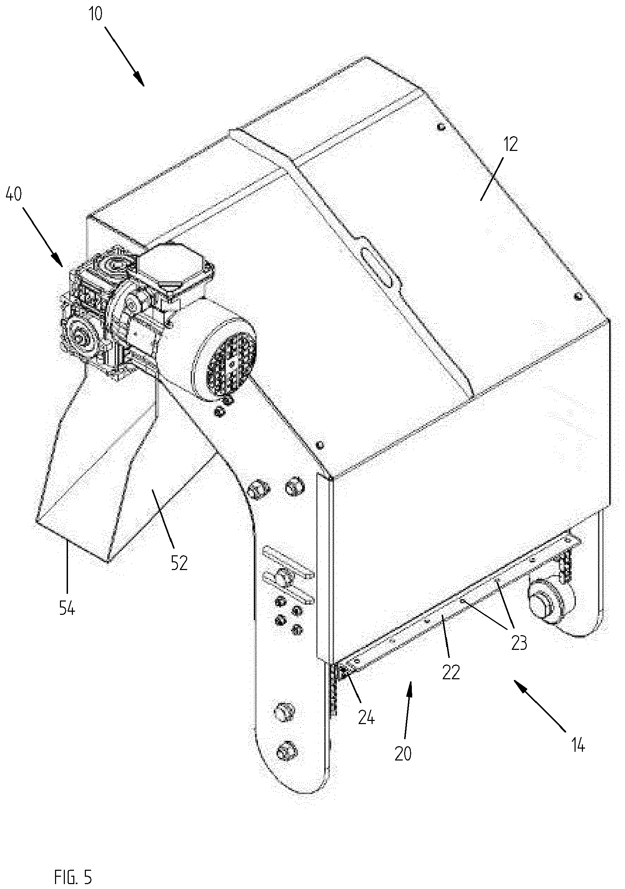

- Figure 5: illustrates the cleaning device of figure 1 isolated from the rest;

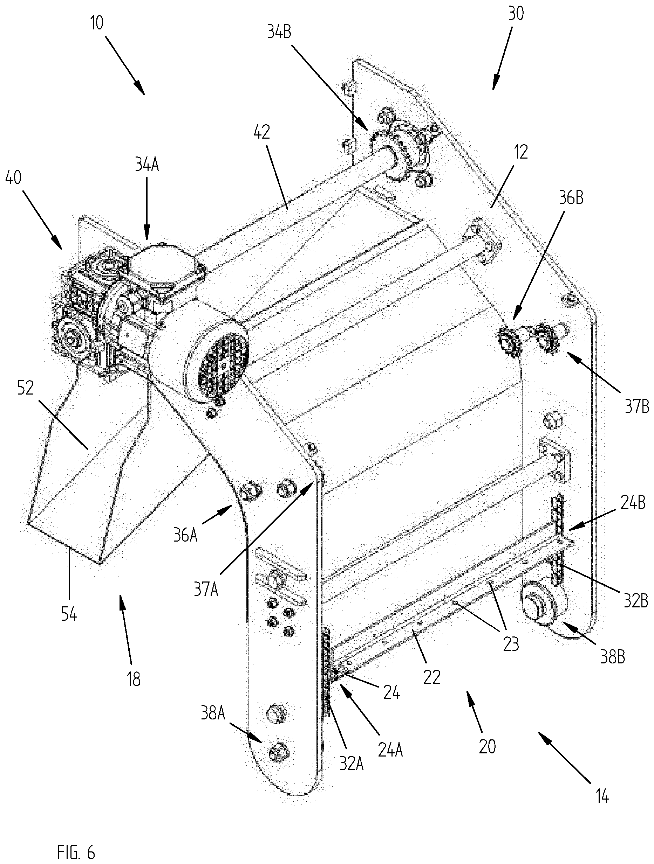

- Figure 6: illustrates the cleaning device of figure 5 with the cover elements removed;
- Figure 7: illustrates the side plan view of figure 6;
- Figure 7A: illustrates an exemplifying schematic view of figure 7;

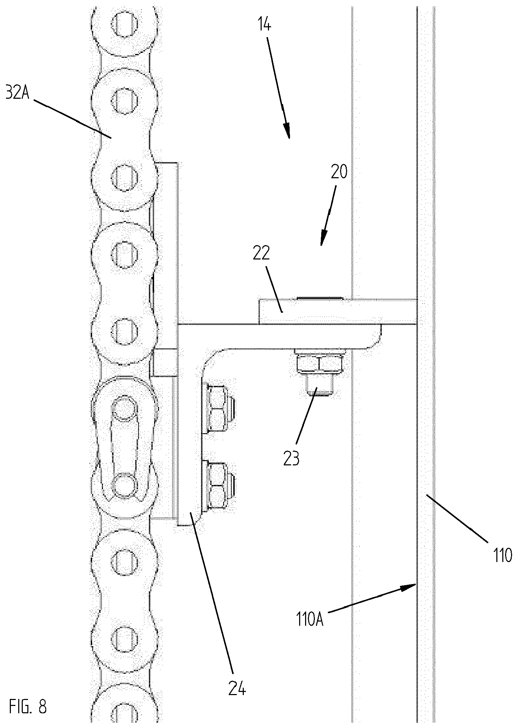

- Figure 8: shows an enlarged detail of figure 7.

With particular reference to the figures, the reference numeral 100 indicates as a whole an evacuation system of processing waste S of machine tools and 10 indicates a cleaning device according to the present invention.

Processing waste S is intended in the context of the present invention, preferably, as the resulting waste during the operation of machine tools, such as for example grinding machines, lathes, etc., consisting of a solid part Ss, for example shavings and/or particles and/or dust removed from corresponding tools (tillers, abrasive discs, etc.), and a liquid part SI coming directly from the processing, such as cooling and/or lubrication liquids/oils.

The evacuation system 100 according to the invention is advantageously arranged near one or more machine tools (not shown in the figures) for receiving said processing waste S. The evacuation system 100 has the function of separating the liquid part SI from the solid part Ss of the processing waste S.

Therefore, the evacuation system 100 comprises an inlet area 102 adapted to receive the processing waste S, a first outlet area 104 for the solid parts Ss of said waste S and a second outlet area 106 for the liquid part SI of said waste S.

Between the inlet area 102 and the second outlet area 106, at least one filtration area 108 is defined where an appropriate filter 110 is appointed to retain the solid parts of the processing waste S.

In order to convey the mixture consisting of the processing waste S between the inlet area 102 and the second outlet area 106, one or more suction pumps 112 arranged downstream of said filter 110 are preferably used. The suction pumps 112 are preferably positioned at the second outlet area 106.

The second outlet area 106 is therefore defined downstream of the filtration area 108. In a preferred embodiment, the second outlet area 106 corresponds substantially with the outlet of said one or more suction pumps 112. A further outlet 109, for example in the form of a sleeve, is preferably defined in the second outlet area 106. Such an outlet 109 can be used, for example, as an emergency outlet or for maintenance interventions.

The solid parts Ss and liquid parts SI of the waste S exiting the evacuation system 100 will be appropriately conveyed into respective containers and/or hydraulic circuits for disposal or further treatment.

The evacuation system 100 preferably comprises a tank 120 provided with said inlet area 102 for the inlet of said processing waste S and said second outlet area 106 for the evacuation of said liquid part SI.

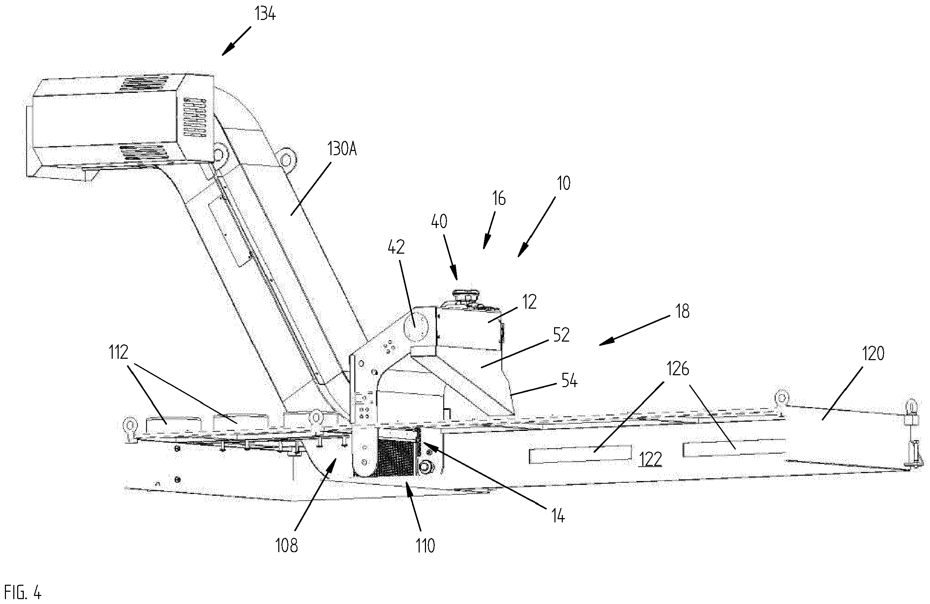

The tank 120 preferably comprises a first compartment 122 adapted to receive said filter 110 and a second compartment 124 hydraulically communicating with the first compartment 122, preferably by means of appropriate through openings 126, which are better seen in figure 4.

In the embodiment illustrated in the figures, the first compartment 122 and the second compartment 124 are preferably side-by-side with each other and more preferably extend according to respective longitudinal axes which are parallel to each other.

In preferred embodiments, however, the two compartments 122, 124 may have any shape which suits the construction and/or layout requirements of the installation site.

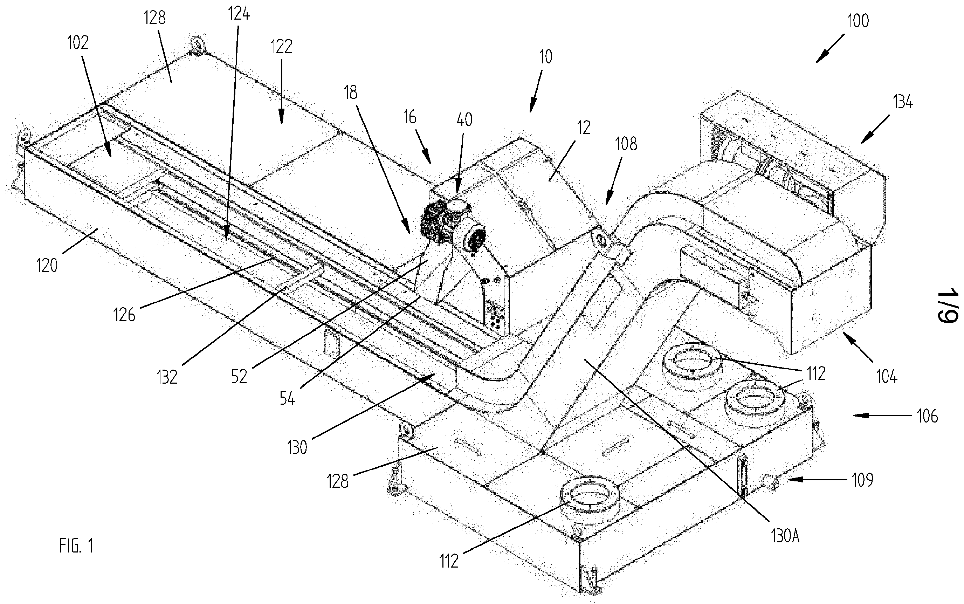

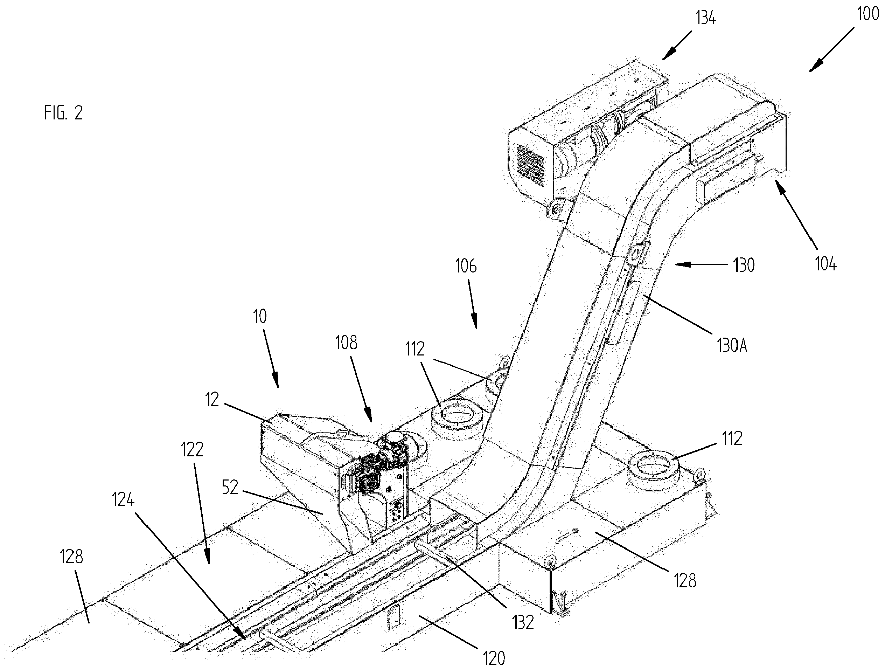

As shown in figures 1 and 2, the first compartment 122 and the suction area comprising the pumps 112 are provided with appropriate protective covers 128.

A conveyor belt 130 is mounted at the second compartment 124 and is assigned to transport the solid parts Ss of the processing waste S towards the first outlet area 104. The conveyor belt 130 preferably comprises a belt 132 closed in a loop and moved by appropriate motorisation means 134. In the figures, for the sake of simplicity the conveyor belt 132 is not shown in a complete manner. In preferred embodiments, and as known in the art, the conveyor belt can comprise an articulated mesh belt and/or a scraper belt.

Preferably, the end part 130A of the conveyor belt 130 is inclined upwardly to define a ramp which promotes the dripping of the liquid SI from the solid parts SS of the waste S. The belt 132 extends and moves inside the second compartment 124 and along the ramp 130.

A first substantial part of the solid parts SS of the waste S is collected directly above the belt 132, as the processing waste S is loaded directly onto the belt 132 at said inlet area 102. Said inlet area 102 is preferably any area above the belt 132 which slides inside the second compartment 124. For this purpose, preferably, the second compartment 124 is open upwards.

The residual part of the waste S falls to the bottom of the second compartment 124 and passes to the first compartment 122 by means of the through openings 126 due to the suction impressed by the suction pumps 112. Sliding along the first compartment 122, the waste S meets the filter 110. The filter 110 preferably comprises a grid with apertures of appropriate size depending on the desired level of filtration (for example, preferably grids with apertures capable of passing particles of less than 8mm up to grids with apertures capable of passing particles of less than 0.1mm in size.

In a preferred embodiment, the grid comprises a woven steel grid for defining said appropriately sized apertures. In variant embodiments, the filter may be made in a different manner which is adapted to the purpose, for example a perforated plate.

At the retaining surface 110A of the filter 110, the solid parts Ss of the processing waste S gradually accumulate during the operation of the system 100 while the liquid part SI is sucked by the pumps 112.

According to an advantageous aspect of the present invention, the cleaning device 10 for the filter 110 is positioned at the filtration area 108.

The cleaning device 10 comprises a support structure 12 and a cleaning element 14 adapted to be arranged at the retaining surface 110A of the filter 110.

The cleaning device 10 then comprises movement means 16 of the cleaning element 14 adapted to move the cleaning element 14 on the retaining surface 110A of the filter 110 and towards a discharge area 18.

The discharge area 18 is associated with evacuation means comprising, preferably, a discharge channel 52, or chute.

The outlet 54 of the discharge channel 52 is preferably positioned above the conveyor belt 130, more preferably above the belt 132.

The cleaning element 14 preferably comprises a laminar element 20 of a conjugate shape to the retaining surface 110A of the filter 110 to be cleaned, more preferably a laminar element 20 is of straight longitudinal extension.

In a preferred embodiment, the cleaning element 14 is placed in direct contact against the retaining surface 110A of the filter 110 and during movement performs a scraping function on the same retaining surface 110A of the filter 110. In variant embodiments, the cleaning element 14 may however be arranged at a certain distance from the retaining surface 110A, for example 1mm, performing a function of removing accumulated material.

The laminar element 20 preferably comprises a plastic portion 22, preferably made of polyzene.

The use of such a material avoids wear of the filter 110 and the laminar element itself 20, in particular when they are placed in direct contact with each other. Furthermore, such material allows for a good coupling with any imperfections in the shape of the filter 110, such as an imperfect flatness.

In a preferred embodiment, the plastic portion 22 is removably associated, preferably by screws 23, with a support portion 24 of the cleaning element 14.

Such a solution facilitates any maintenance or replacement of the plastic portion 22.

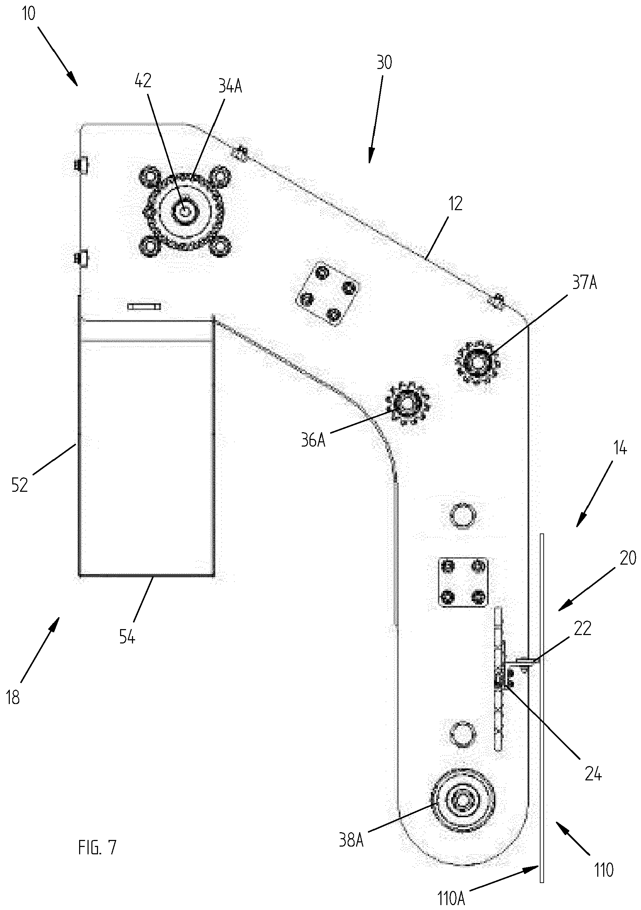

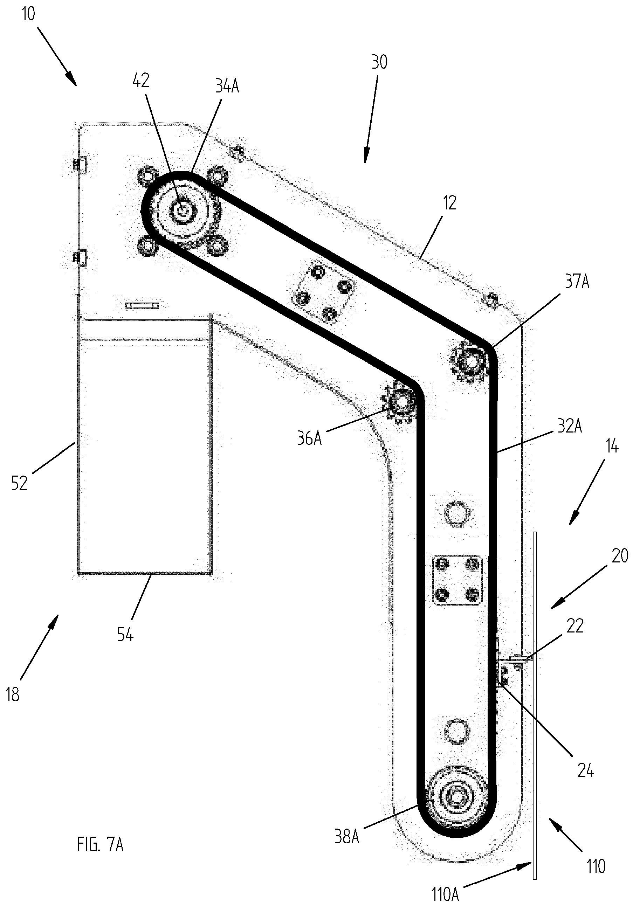

The movement means 16 of the cleaning element 14 preferably comprise a closed-loop articulated mechanism 30 for moving the cleaning element 14 in an advancement direction along a closed loop, as shown in the exemplifying figure of figure 7A. In the other figures, for the sake of simplicity, the articulated mechanism 30 is not shown in the entirety thereof closed in a loop, but only a portion thereof at the filter 110.

At least one part of said closed circuit involves the retaining surface 110A of the filter 110.

The articulated mechanism 30 preferably comprises a pair of chains 32A, 32B to which the ends 24A, 24B of the support portion 24 of the cleaning element 14 are fixed.

The chains 32A, 32B wind on respective drive gear wheels 34A, 34B associated with the outlet shaft 42 of an electric motor 40.

The closed-loop path is then ensured by pairs of idler gear wheels 36A, 36B, 37A, 37B, 38A, 38B.

The rotation of the cleaning element 14 along the closed-loop path, according to the counter-clockwise direction with reference to figure 7A, results in a first cleaning/scraping action of the retaining surface 110A of the filter 110 when the cleaning element 14 moves from the bottom to the top at the filter 110 itself. The waste material Ss removed from the filter 110 is collected above the cleaning element 14 which, as it advances, is brought above at the discharge area 18.

In the discharge area 18 during the rotation of the cleaning element 14 around the drive wheels 34A, 34B, the waste material Ss collected above the cleaning element 14 is released above the discharge channel 52 and, from there, preferably above the conveyor belt 132 to be finally evacuated outside the system 1 in the first outlet area 104.

In preferred embodiments, not shown, the discharge area of the cleaning device may not be above the conveyor belt but in any other appropriate area where the waste material from the cleaning element may be collected and/or evacuated.

The rotation along the closed-loop circuit therefore accomplishes the cleaning operation of the filter 110. In a preferred embodiment, the rotation along the closed circuit of the cleaning element 14 occurs continuously. In variant embodiments, the cleaning operation may be carried out periodically or occasionally when scheduled and/or only if necessary.

In a variant embodiment, the rotation of the cleaning element 14 may not occur according to the closed path but in an alternating manner, i.e., the cleaning element 14 moves upwards from below at the filter 110 to perform the cleaning/scraping action of the retaining surface 110A of the filter 110 and the waste material Ss removed from the filter 110 and collected above the cleaning element 14 and carried above at the discharge area 18. After discharging, the cleaning element 14 is returned to the initial position thereof under the filter 110 by a reverse rotation of the articulated mechanism 30 (clockwise in figure 7A).

Furthermore, in preferred embodiments, the movement means may be made in a different manner and capable of ensuring a path for the cleaning element which first involves the retaining surface of the filter and then the movement thereof towards the discharge area.

From what has been described above, it is evident how the cleaning device of the invention allows the automatic cleaning of the filter in the evacuation system, reducing and/or simplifying the possible maintenance and/or repair interventions by persons responsible for such operations.

The machine downtimes due to this type of intervention are also reduced.

Furthermore, periodic or continuous filter cleaning ensures the filtration effectiveness of the filter while maintaining system efficiency at the maximum desired values.

Furthermore, the various parts of the system, and in particular the suction pumps, can work in the optimal conditions thereof, reducing the risks of malfunction and increasing the reliability of the system.

From what has been said, it is clear that the new cleaning device and the new evacuation system allow to reach the set goals.

In a preferred embodiment of the invention, the cleaning device 10 is fixedly mounted and is an integral part of the evacuation system 100, preferably providing for the fixing of the support structure 12 of the cleaning device 10 to the tank 120 of the system 1.

However, in variant embodiments, the cleaning device may consist of a separate unit removably associated with the evacuation system at the filtration area.

In a further variant embodiment, the cleaning device may consist of a unit in itself associable with the already existing systems by providing simple modifications applicable by those skilled in the art to allow the assembly thereof at the filter.

It is understood however that what is described above has an illustrative and non-limiting purpose, therefore, possible variants of detail which may be necessary for technical and/or functional reasons, are considered from now falling within the same protective scope defined by the claims indicated below.

## Claims

1. Cleaning device (10) for a filter (110) in an evacuation system (100) of machine tool processing waste (S), **characterised in that** it comprises:
a. a support structure (12);
b. a cleaning element (14) adapted to be placed at said filter (110);
c. movement means (16) of said cleaning element (14) adapted to move said cleaning element (14) on the retaining surface (110A) of said filter (110) and towards a discharge area (18).

2. Device (10) according to claim 1, **characterised in that** it comprises evacuation means (52) arranged at said discharge area (18).

3. Device (10) according to claim 2, **characterised in that** said evacuation means (52) comprise a discharge channel, preferably a chute.

4. Device (10) according to any one of the preceding claims, **characterised in that** said cleaning element (14) comprises a laminar element (20) of a conjugate shape to said retaining surface of said filter (110).

5. Device (10) according to claim 4, **characterised in that** said laminar element (20) is of longitudinal extension, preferably straight.

6. Device (10) according to any one of claims 3 to 5, **characterised in that** said laminar element (20) comprises a plastic material portion (22), preferably made of polyzene.

7. Device (10) according to claim 6, **characterised in that** said plastic material portion (22) is removably associated, preferably by means of screws (23), with a support portion (24) of said cleaning element (14).

8. Device (10) according to any one of the preceding claims, **characterised in that** said movement means (16) comprise an articulated mechanism (30) with a closed-loop structure for moving said cleaning element (14) in an advancement direction along a closed circuit.

9. Device (10) according to claim 8, **characterised in that** part of said closed circuit involves said retaining surface (100A) of said filter (110) where solid parts (Ss) of said processing waste (S) are deposited.

10. Evacuation system (100) of machine tool processing waste (S) comprising an inlet area (102) for said processing waste (S), a first outlet area (104) for solid parts (Ss) of said processing waste (S), a second outlet area (106) for the liquid part (SI) of said processing waste (S) and at least one filtration area (108) between said inlet area (102) and said second outlet area (106), said filtration area (108) comprising a filter (110) for retaining solid parts (Ss) of said processing waste (S), **characterised in that** it comprises a cleaning device (10) for said filter (110) made according to any one of the preceding claims.

11. System (100) according to claim 10, **characterised in that** it comprises a tank (120) provided with said inlet area (102) for said processing waste (S) and said second outlet area (106) for the liquid part (SI) of said processing waste (S).

12. System (100) according to claim 10 or 11, **characterised in that** it comprises a suction system (112) arranged downstream of said filter (110) and at said second outlet area (106) and preferably said suction system (112) comprises suction pumps (112).

13. System (100) according to any one of claims 10 to 12, **characterised in that** it comprises a conveyor belt (130) for transporting said solid parts (Ss) of said processing waste (S) towards said first outlet area (104).

14. System (100) according to claim 13 when dependent on claim 11, **characterised in that** said tank (120) comprises a first compartment (122) for said filter (110) and a second compartment (124) adapted to receive said conveyor belt (130), said two compartments (122, 124) hydraulically communicating with each other.

15. System (100) according to any one of claims 10 to 14, **characterised in that** said cleaning device (10) is associated with said filtration area (108) so that said cleaning element (14) is arranged at the retaining surface (110A) of said filter (110).
